# EUROPEAN PATENT APPLICATION

(11) **EP 4 852 400 A2**
(43) Date of publication of application: **09.12.2026**
(21) Application number: 26212100.7
(22) Date of filing: 13.04.2012
(51) Int. Cl.: H04L 49/55

(54) **DEVICE FOR SUPPORTING SUB-NETWORK CONNECTION PROTOCOL OVER PACKET NETWORK**

(30) Priority: 15.04.2011 US 201113087438
(62) Document number(s) of the earlier application(s) in accordance with Art. 76 EPC: 22163758.0 / 4 037 203; 20214536.3 / 3 813 274; 19167852.3 / 3 525 365; 17187700.4 / 3 270 527; 12772045.6 / 2 697 919
(71) Applicant: ORCKIT IP, LLC, Newton, MA 02459 (US)
(72) Inventor: COHN, Daniel, 4322044 Ra'ananna (IL); RAM, Rafi, 46326 Herzliya (IL)
(74) Representative: Becker Kurig & Partner Patentanwälte mbB

(57) **Abstract**

A method is presented for supporting SNCP over a packet network connecting to two SDH sub-networks and transporting one or more SDH paths that are SNCP-protected in both SDH sub-networks. The packet network connects to each of two sub-network interconnection points by a working path and a protection path. The packet sub-network may provide the same type of path protection as an SDH sub-network using SNCP, while avoiding bandwidth duplication.

## Description

### FIELD OF THE INVENTION

The present invention relates to telecommunications, and more particularly, is related to high availability telecommunication networks.

### BACKGROUND OF THE INVENTION

Traditional analog voice telecommunication was carried over dedicated circuits, so that each connection used the full bandwidth of a circuit. With the advent of digital telecommunications, data and voice messages became packetized, so that a physical circuit may carry multiple virtual circuits. While this provided the advantages of greater efficiency in terms of more usage of each physical circuit, the tradeoff was occasional quality issues, such as latency if a particular circuit was over utilized.

Synchronous Digital Hierarchy (SDH) and synchronous optical network (SONET) were originally developed to transport voice and data over dedicated fiber optic cables. Several methods exist for transmitting SDH/SONET signals over packet networks using pseudo wires (PW), such as Circuit Emulation over Packet (CEP) as defined in RFC 4852.

Among the many protection mechanisms in available SDH and SONET technologies, Sub-network Connection Protocol (SNCP) and Unidirectional Path Switched Ring (UPSR) can be used to provide path protection. In these protection schemes, a SNCP termination equipment (STE) transmits two copies (working and protection) of the protected path over typically disjoint routes, while the STE at the receiving end switches from the working to the protection path when the working path fails or its performance falls below the required level.

SNCP provides protection in the sub-network level, so when a path route includes multiple sub-networks, failures in an individual sub-network are locally repaired and do not affect protection offered at the other sub-networks. A typical example of sub-networks is the SDH ring. UPSR is defined for a ring topology only, and the same principle applies with rings instead of sub-networks.

To provide protection against a node failure, sub-network interconnection can take place across two different nodes. In this case, the connection at one location is connected to the network using two network connections, for example, an add-drop multiplexer. The first node may be active, while the second node may be standby. If the active node fails, for example due to a hardware failure, the standby node becomes active, minimizing the loss of network connection time. This is known as dual node interconnection (DNI) or dual homing.

Using DNI in SNCP applications may cause additional complexity in the protection scheme, as SNCP and UPSR provide protection against a single failure in each sub-network, and DNI also protects against interconnecting failures. By repairing failures in the sub-network level, a failure in one sub-network may not be contained within the sub-network, thus impacting protection in other sub-networks.

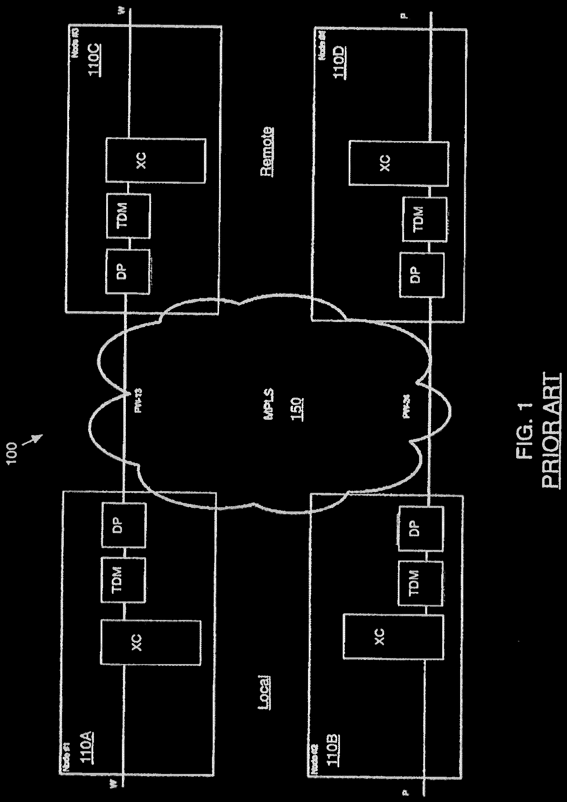

FIG. 1 is a schematic diagram of a prior art first network 100 having four nodes 110, including a first node 110A, a second node 110B, a third node 110C and a fourth node 110D. Each node 110 may be, but is not limited to, for example, path termination equipment (PTE). The nodes 110 are configured such that the first node 110A and the second node 110B form a DNI setup on a local side of an MPLS sub-network 150, and the third node 110C and the fourth node 110D form a DNI setup on the remote side of the MPLS sub-network 150. The first node 110A and the third node 110C are connected by working connection PW-13, and the second node 110B and the fourth node 110D are connected by protection connection PW-24. A failure in, for example PW-13 will not be contained to the MPLS sub-network, since the signal received by the first node 110A will not be transmitted by the third node 110C, so a failure in the working PW in a SDH sub-network connected to the third node 110C and the fourth node 110D would result in a complete failure in the protected PW. In this case, a failure in the MPLS sub-network affects the level of protection in the interconnected SDH sub-network, such that the protection scheme does not protect against a single failure in each sub-network. Therefore, there is an unmet need to implement SNCP/UPSR over packet switched networks using DNI, as well as single node interconnections.

A protection mechanism capable of providing both local and end-to-end connection protection for dual homed access/aggregation devices or customer-edge devices in a network is described in U.S. Patent No. 7,345,991 to Shabtay et al. entitled: "Connection protection mechanism for dual homed access, aggregation and customer edge devices". The protection mechanism provides end-to-end and fast local protection for off the shelf access devices that do not have any built in per-connection protection capabilities. The access device is connected via two separate physical uplinks to two edge switches of the network. For each connection to be protected, a main path is provisioned from one edge switch and an alternative path is provisioned from the other edge switch. The edge switches are adapted to comprise means for switching traffic from the main path to the alternative path in the event a failure along the main path is detected. Failures both in the stack portion, the core portion and in the access device uplinks are protected against.

A computer network that includes a core network connected with first and second Ethernet access domain networks, is described in U.S. Patent Application Publication No. 2006/0047851 to Volt et al. entitled: "Computer network with point-to-point pseudowire redundancy". In the computer network, each of Ethernet access domain networks includes a user-facing provider edge (u-PE) device, a primary network-facing provider edge (n-PE) device, a redundant n-PE device, and a plurality of aggregation provider edge (Agg-PE) devices providing connectivity between to the u-PE device and the primary and redundant n-PE devices, the Agg-PE devices running a spanning-tree protocol (STP) algorithm. A primary data path is provided along with first and second redundant data paths that include first and second redundant pseudowires (PWs), respectively, connected across the core network, the first and second redundant data paths being blocked by the STP algorithm when the primary data path is available, the STP algorithm unblocking either the first or second redundant data path in response to a failure of the primary data path. It is emphasized that this abstract is provided to comply with the rules requiring an abstract that will allow a searcher or other reader to quickly ascertain the subject matter of the technical disclosure.

An absolute route diversity (ARD) for mesh restorable sub-network connection protection (MR-SNCP) services is described in U.S. Patent Application Publication No. 2010/0104282 to KHAN et al. entitled: "Systems and methods for absolute route diversity for mesh restorable connections". ARD addresses concerns in MR-SNCP by providing absolute path diversity between both paths (e.g., peer Sub Network Connections (SNCs)) of an MR-SNCP connection. If an ARD condition is not met, the peer SNC is not mesh restored and the MR-SNCP works with just one single SNC. The advantage of this approach is to reuse the bandwidth saved from ARD for other MR-SNCP, i.e. more efficient bandwidth utilization due to ARD for other MR-SNCPs, and better service quality guarantee (protection) in terms of planning and managing the network bandwidth.

ITU-T G.808.1 standard: "Generic protection switching - Linear trail and subnetwork protection" (03/06) Approved 29 march, 2006, defines the generic functional models, characteristics and processes associated with various linear protection schemes for connection-oriented layer networks; e.g., Optical Transport Networks (OTN), Synchronous Digital Hierarchy (SDH) networks and Asynchronous Transfer Mode (ATM) networks. It also defines the objectives and applications for these schemes. Protection schemes described in this Recommendation are trail protection and subnetwork connection protection with various monitoring alternatives for individual signals or groups of signals. Furthermore, survivability offered by the Link Capacity Adjustment Scheme (LCAS) is described.

A method and a device for conveying traffic in a network are provided in WIPO (PCT) patent application publication WO 2011/003459 A1 to Zehavit Alon et al. entitled: "Method and device for conveying traffic in a network". The network comprises at least one intermediate network element; wherein a master node is connected via the at least one intermediate network element to a first slave node; wherein a deputy node is connected via the at least one intermediate network element to the first slave node; wherein traffic is conveyed between the master node and the first slave node; wherein in case of a fault condition the traffic is conveyed between the deputy node and the first slave node. Furthermore, a communication system is suggested comprising said device.

A computer network that includes first and second Ethernet access domain networks, is described in U.S. Patent Application Publication US 2007/0008982 A1 to Voit et al. entitled: "Redundant pseudowires between Ethernet access domains". Each of Ethernet access domain networks including a user-facing provider edge (u-PE) device, and a stack group of network-facing provider edge (n-PE) devices coupled with the u-PE device, the n-PE devices running a bidding protocol to select one of the n-PE devices as a primary n-PE device for a single pseudowire connection path between the first and second Ethernet access domain networks. It is emphasized that this abstract is provided to comply with the rules requiring an abstract that will allow a searcher or other reader to quickly ascertain the subject matter of the technical disclosure.

A system and method of managing redundant and multi-segment pseudo-wire is described in U.S. Patent Application Publication US 2008/0240101 A1 to Shao et al. entitled: "Management of redundant and multi-segment pseudo-wire". The system and method including calculating two aggregated endpoints with two or more local endpoints, at least one local endpoint being a backup endpoint, mapping the aggregated endpoints and a plurality of nodes interconnected with one another and the local endpoints, determining an overall status of the system and setting an overall status indicator, determining an operational status of individual components in the system and setting associated status indicators.

A system and method for multi-nodal APS (MN-APS) protection switching for a virtual private LAN service (VPLS) using a redundant pair of PE (provider edge) nodes is provided in U.S. Patent Application Publication US 2007/0253326 A1 to Saha et al. entitled: "System and method for resilient VPLS over multi-nodal APS protected provider edge nodes". In the event of an APS switchover, the previously active node of the redundant pair sends explicit requests to the other provider edge nodes to flush their MAC address entries that they had previously learned through the previously active node, facilitating quicker re-convergence and reduction of black-holing.

A communication system that is configured to include a plurality of edge nodes each coupled to a user network, and a plurality of point-to-point links each coupling a pair of edge nodes, is described in U.S. Patent Application Publication US 2010/0303081 A1 to Miyabe entitled: "Communication system and method for forwarding a packet among a plurality of edge routerss". Any pair of edge nodes is coupled via a point-to-point link included in the plurality of point-to-point links. When transmitting a first packet from a first user network coupled to a first edge node, to a second user network coupled to a second edge node, the first edge node creates a second packet by adding an ingress node identifier identifying the first edge node to the first packet received from the first user network. The second packet is forwarded among the plurality of edge nodes via point-to-point links, based on the ingress node identifier in the second packet and forwarding control information held in the each of the plurality of edge nodes.

Multicast traffic that may be routed using DVMRP or PIM over a Split MultiLink Trunk (SMLT) is described in U.S. Patent Publication US 7,719,958 B1 to Azimi et al. entitled: "Method and apparatus for enabling multicast over split multilink trunking". Network elements on the split side of the SMLT are interconnected by an Inter-Switch Trunk (IST) to enable them to exchange control messages associated with the multicast. When a control message is received on the IST, the network element will determine if the multicast control message is associated with a normal multicast or is associated with multicast over an SMLT link. Control messages related to SMLT links will be processed as if they were received over the SMLT link rather than the IST link. To prevent traffic from being forwarded by multiple network elements over the SMLT link, data traffic from an IST link may not be transmitted over an SMLT link. Flags are used to indicate whether a link is a SMLT link or regular link. Fast recovery may occur by causing participants to transmit triggered join messages upon recovery from a failure.

An invention that relates to a method in which at least two aggregation devices, which logically operate as a single device, are interconnected by an Inter Switch Trunk (IST) link, is described in U.S. Patent Application Publication US 2005/0007951 A1 to Lapuh et al. entitled: "Routed split multilink trunking". Thereafter, forwarding records of local routing instances between the at least two aggregation devices are synchronized to enable one aggregation device to support data traffic for the other aggregation device if it has failed or a link to the aggregation device has failed.

An optical crossconnect apparatus is described in U.S. Patent Publication US 6,362,905 B1 to Fukashiro et al. entitled: "Optical crossconnect apparatus and optical transmission system". The optical crossconnect apparatus includes one terminal connected to a transmission path from one optical transmission terminal station and another terminal connected to a transmission path from another optical transmission terminal station, a first optical signal switch having "M1" ports and "N1" ports, through which the optical signal can pass, a second optical signal switch having "M2" ports and "N2" ports, through which the optical signal can pass, and "L" optical signal repeaters, one end connected to the "N1" ports of the first optical signal switch, and the other end connected to the "N2" ports of the second optical switch. The "N1" and the "N2" ports are equal to "L" optical signal repeaters. The "M1" ports of the first optical signal switch connected to the one terminal, and the "M2" ports of the second optical signal switch connected to the other terminal are larger than, or equal to 2.

A method of transmitting data packets in a communication network comprises receiving, at an originating node, at least one frame of time-division-multiplexed (TDM) data and converting the at least one frame of TDM data into a first flow of data packets, is described in U.S. Patent Application Publication US 2003/0185201 A1 to Dorgan entitled: "System and method for 1 + 1 flow protected transmission of time-sensitive data in packet-based communication networks". Each packet of the first flow includes a header identifying a packet sequence number and a first path between the originating node and a destination node. The method further includes a step of generating a second flow of data packets, the second flow of data packets being representative of the at least one frame of TDM data and including a header identifying a packet sequence number and a second path between the originating node and a destination node. The first and second flows of data packets are launched over the corresponding paths. At the receiver end, only the flow of data packets associated with the path designated as the working path is converted back into frames of TDM data and forwarded to an appropriate external interface. If monitoring of the sequence number or received rate of packets over the working path reveals a failure or poor performance, a transfer is performed such that only the flow of data packets associated with the protection path are converted into frames of TDM data.

A method, a system and a node for implementing Subnetwork Connection Protection (SNCP) in a Multi-Protocol Label Switching (MPLS) network are described in U.S. Patent Application Publication US 2008/0117912 A1 to He entitled: "Method, system and node for implementing subnetwork connection protection in multi-protocol label switching network". The method includes: sending, by a first node of a subnetwork of the MPLS network, an Operation, Administration and Maintenance (OAM) packet on a working path and a protection path of the subnetwork respectively; determining, by a second node of the subnetwork, working status of the working path and the protection path of the subnetwork according to the OAM packet on the working path and the OAM packet on the protection path, and selecting to receive traffic from one of the working path and the protection path of the subnetwork according to the working status. In accordance with the embodiments of the present invention, the SNCP may be implemented in the Transport Multi-Protocol Label Switching (T-MPLS) network.

A device having circuit bundles and a method of configuring the network device to provide resiliency and protection for network circuits are described in U.S. Patent Application Publication US 2009/0109869 A1 to T. Hsiao et al. entitled: "Circuit bundle for resiliency/protection of circuits". A circuit bundle provides the ability to group multiple circuits of the same type for resiliency/protection. There is an active virtual circuit that is selected based on a user configured priority value defining priority for carrying circuit traffic. When the active virtual circuit fails, alternative virtual circuits are selected to carry the circuit traffic, again based on user configured priority. Virtual circuits included in the circuit bundle can have different destinations, and include at least multipoint virtual circuits.

A protection mechanism capable of providing both local and end-to-end connection protection for dual homed access/aggregation devices or customer-edge devices in a network is described in U.S. Patent Publication US 7,345,991 B1 to Shabtay et al. entitled: "Connection protection mechanism for dual homed access, aggregation and customer edge devices". The protection mechanism provides end-to-end and fast local protection for off the shelf access devices that do not have any built in per-connection protection capabilities. The access device is connected via two separate physical uplinks to two edge switches of the network. For each connection to be protected, a main path is provisioned from one edge switch and an alternative path is provisioned from the other edge switch. The edge switches are adapted to comprise means for switching traffic from the main path to the alternative path in the event a failure along the main path is detected. Failures both in the stack portion, the core portion and in the access device uplinks are protected against.

A computer network that includes a core network connected with first and second Ethernet access domain networks is described in U.S. Patent Application Publication US 2006/0047851 A1 to Voit et al. entitled: "Computer network with point-to-point pseudowire redundancy". Each of Ethernet access domain networks including a user-facing provider edge (u-PE) device, a primary network-facing provider edge (n-PE) device, a redundant n-PE device, and a plurality of aggregation provider edge (Agg-PE) devices providing connectivity between to the u-PE device and the primary and redundant n-PE devices, the Agg-PE devices running a spanning-tree protocol (STP) algorithm. A primary data path is provided along with first and second redundant data paths that include first and second redundant pseudowires (PWs), respectively, connected across the core network, the first and second redundant data paths being blocked by the STP algorithm when the primary data path is available, the STP algorithm unblocking either the first or second redundant data path in response to a failure of the primary data path. It is emphasized that this abstract is provided to comply with the rules requiring an abstract that will allow a searcher or other reader to quickly ascertain the subject matter of the technical disclosure. It is submitted with the understanding that it will not be used to interpret or limit the scope or meaning of the claims.

A disclosure that provides absolute route diversity (ARD) for mesh restorable sub-network connection protection (MR-SNCP) services is described in U.S. Patent Application Publication US 2010/0104282 A1 to Reyaz KHAN et al. entitled: "Systems and methods for absolute route diversity for mesh restorable connections". ARD addresses concerns in MR-SNCP by providing absolute path diversity between both paths (e.g., peer Sub Network Connections (SNCs)) of an MR-SNCP connection. If an ARD condition is not met, the peer SNC is not mesh restored and the MR-SNCP works with just one single SNC. The advantage of this approach is to reuse the bandwidth saved from ARD for other MR-SNCP, i.e. more efficient bandwidth utilization due to ARD for other MR-SNCPs, and better service quality guarantee (protection) in terms of planning and managing the network bandwidth.

A novel and useful system and method for fast protection of dual homed Virtual Private LAN Service (VPLS) spokes is described in U.S. Patent Application Publication US 2011/0194404 A1 to Kluger et al. entitled: "System and method for fast protection of dual-homed virtual private lan service (vpls) spokes". Fast protection is achieved by forwarding traffic to the dual homed VPLS spoke from the VSI that is not currently the one currently serving it, as long as the traffic is known unicast. Egress traffic at the VSI that does not currently serve the VPLS-spoke is re-routed over a protection transport entity to the VPLS-spoke through the device of the VSI currently serving it. Broadcast, multicast and unknown (BMU) traffic is sent to the VPLS spoke only by the BMU-primary VSI. BMU frames received at the BMU-secondary VSI are dropped. A fast election process serves to elect the BMU-primary for coordinating between the two VSIs serving the same VPLS spoke. In addition, a flag is inserted in each frame at an ingress VSI to indicate whether the frame is known or unknown unicast. Unknown unicast frames are forwarded to the VPLS spoke only by the BMU-primary.

Techniques for transmitting SONET/SDH traffic over an Advanced Switching compatible switch fabric are described in U.S. Patent Application Publication US 2006/0153179 A1 to Ho et al. entitled: "Techniques for transmitting and receiving traffic over advanced switching compatible switch fabrics". In one implementation, SONET/SDH traffic may be aggregated and encapsulated into Advanced Switching compatible packets. In one implementation, the contents of the Advanced Switching compatible packets may be configurable and directions on how to unpack the Advanced Switching compatible packets may be transmitted to end point nodes. In one implementation, SONET/SDH pointer justification generation may be divided between a source node which transmits SONET/SDH traffic to the switch fabric and an end point node which receives SONET/SDH traffic from the switch fabric.

A method for protection switching of the pseudo wire in the packet switching network and the device thereof is described in EP Patent Application Publication EP 1881643 A1 to Li entitled: "A method for protection switching of the pseudo wire in the packet switch network and the device thereof". The method includes: the pseudo wire in the packet switching network is divided into the corresponding working pseudo wire group and the protection pseudo wire group; and the service is protection switched between the working pseudo wire group and the protection pseudo wire group based on the state of the working pseudo wire group and the protection pseudo wire group. By using this invention can make the end-to-end packet protection switching of the pseudo wire in the packet switching network more efficiently.

The Recommendation ITU-T G.808.1 (03/06) by the 'TELECOMMUNICATION STANDARDIZATION SECTOR OF ITU' entitled: "Generic protection switching - Linear trail and subnetwork protection" defines the generic functional models, characteristics and processes associated with various linear protection schemes for connection-oriented layer networks; e.g., Optical Transport Networks (OTN), Synchronous Digital Hierarchy (SDH) networks and Asynchronous Transfer Mode (ATM) networks. It also defines the objectives and applications for these schemes. Protection schemes described in this Recommendation are trail protection and subnetwork connection protection with various monitoring alternatives for individual signals or groups of signals. Furthermore, survivability offered by the Link Capacity Adjustment Scheme (LCAS) is described. Generic functional models, characteristics and processes for ring protection and interconnected subnetwork (e.g., ring) protection schemes are defined in other Recommendations.

### SUMMARY OF THE INVENTION

Embodiments of the present invention provide a method for supporting SNCP over a packet network. Briefly described, the present invention is directed to a network having a packet switched sub-network configured to provide pseudo wire transport, a first sub-network connected to the packet switched sub-network, and a second sub-network connected to the packet switched sub-network. The first sub-network protocol and the second sub-network protocol are selected from a group consisting of SDH and SONET. The first sub-network and the second sub-network provide PW protection services selected from a group consisting of SNCP and UPSR. The network is configured to carry data plane traffic over the packet-switched sub-network concurrently by no more than one pseudo wire between the first sub-network and the second sub-network.

A second aspect of the present invention is directed to a method for providing failure protection at the sub-network level in a network having a path traversing a plurality of sub-networks, such that a path failure in an individual sub-network is locally repaired and does not affect protection offered at another sub-network. The method includes the step of providing a network comprising a first sub-network and a second sub-network. The first sub-network and the second sub-network are in communication through a packet switched network, wherein the first sub-network protocol and the second sub-network protocol are selected from a group consisting of SDH and SONET.

The method under the second aspect of the present invention also includes the steps of configuring path protection for the first sub-network from a group consisting of SNCP and UPSR, providing a first STE in the first sub-network, providing a second STE in the first sub-network, and configuring the second STE to terminate a third pseudo wire between the first sub-network and the second sub-network.

Other steps include configuring the second STE to terminate a second pseudo wire between the first sub-network and the second sub-network, configuring the first STE to terminate a first pseudo wire between the first sub-network and the second sub-network, configuring the first STE to terminate a fourth pseudo wire between the first sub-network and the second sub-network, and configuring the first STE to transport over the packet network up to one of the group including the first pseudo wire, and the fourth pseudo wire. Further steps include configuring the second STE to transport over the packet network up to one of the group including the second pseudo wire, and the third pseudo wire, and configuring the first STE and the second STE such that the packet sub-network transports data plane traffic on exactly one PW between the first sub-network and the second sub-network selected from the group of PWs including the first pseudo wire, the second pseudo wire, the third pseudo wire, and the fourth pseudo wire.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principals of the invention.
FIG. 1 is a schematic diagram of a prior art first network having four SNCP terminating nodes.
FIGS. 2A-2E are schematic diagrams of a second network having four SNCP terminating nodes:

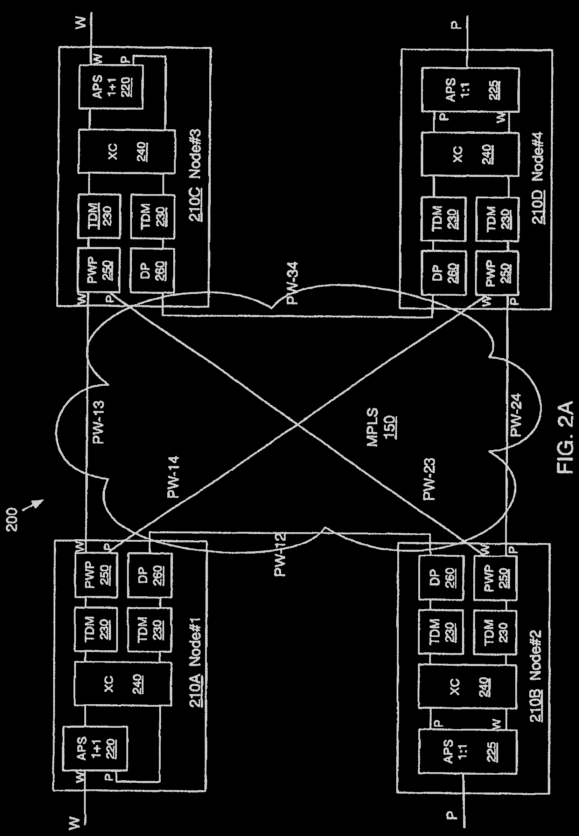

   FIG. 2A illustrates the basic connectivity among four nodes;

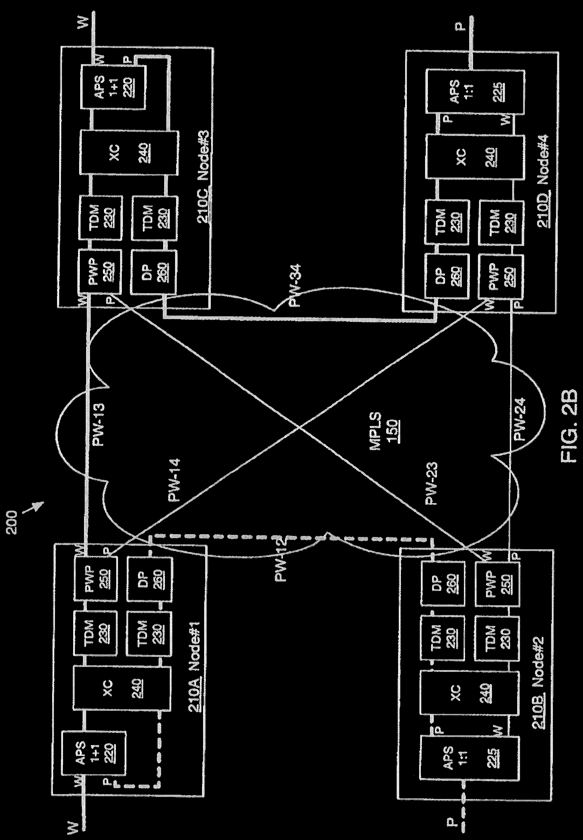

   FIG. 2B illustrates the working and protection paths of the first sub-network under normal conditions;

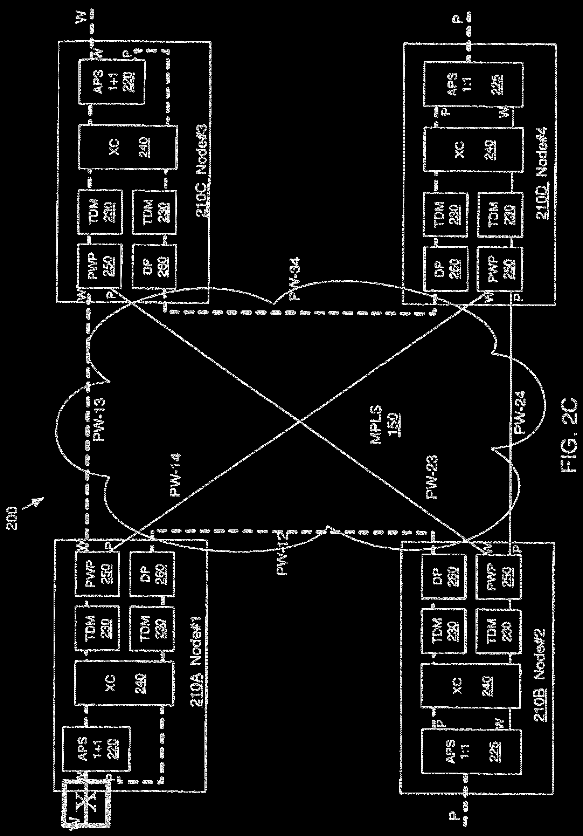

   FIG. 2C illustrates the working and protection paths upon a failure in the working path connected to the first node;

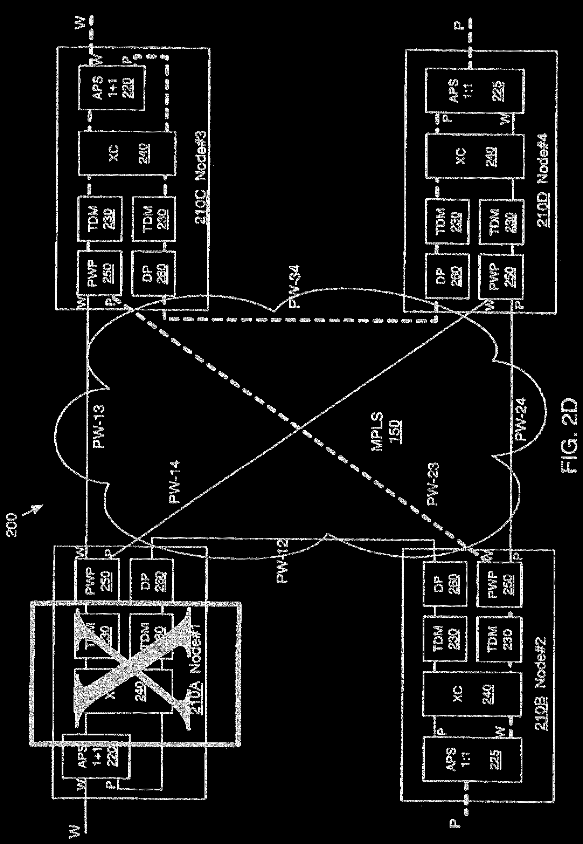

   FIG. 2D illustrates the working and protection paths upon a failure of the first node; and

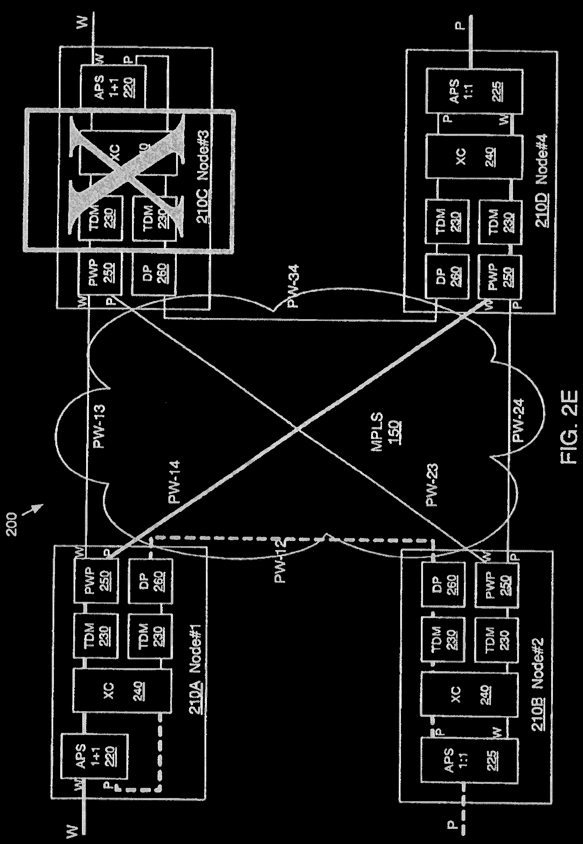

   FIG. 2E illustrates the working and protection paths upon a failure of the third node.

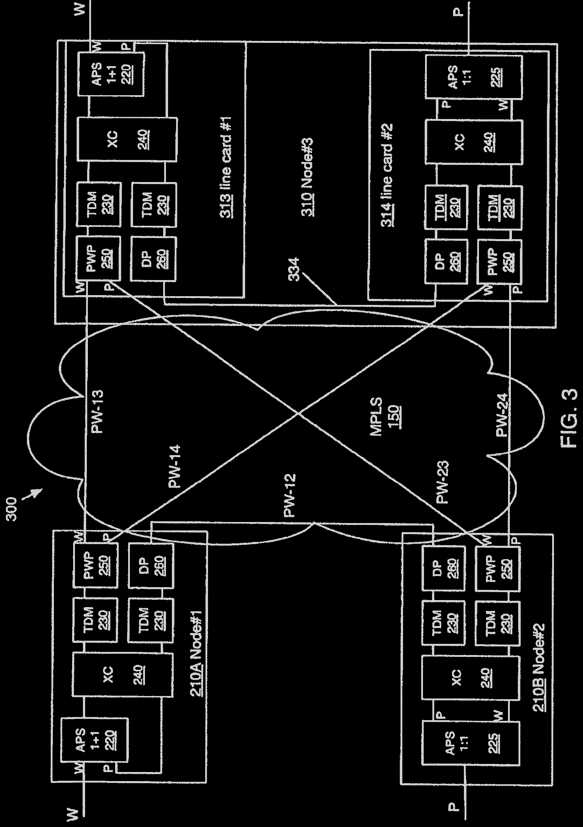

FIG. 3 is a schematic diagram of a third network having three SNCP terminating nodes.

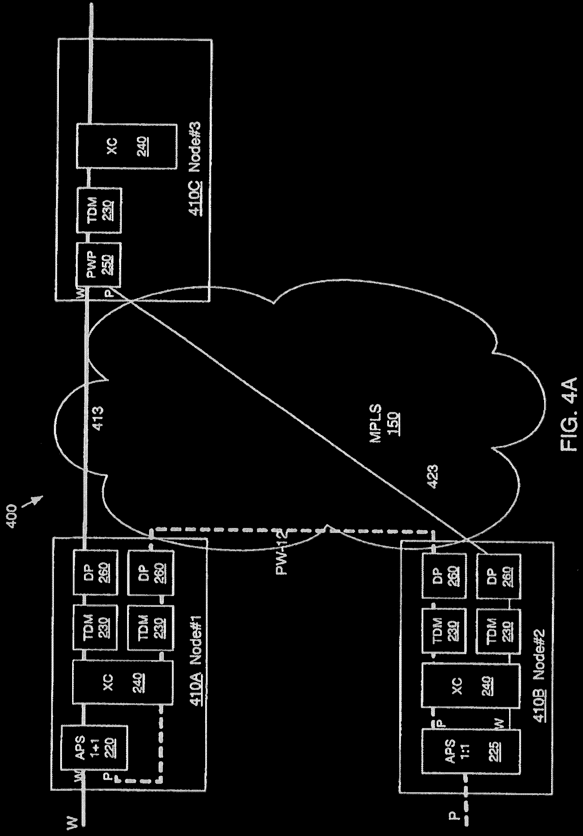

FIGS. 4A-4C are schematic diagrams of a fourth network having three SNCP terminating nodes:
   FIG. 4A illustrates the path of the first sub-network under normal conditions;

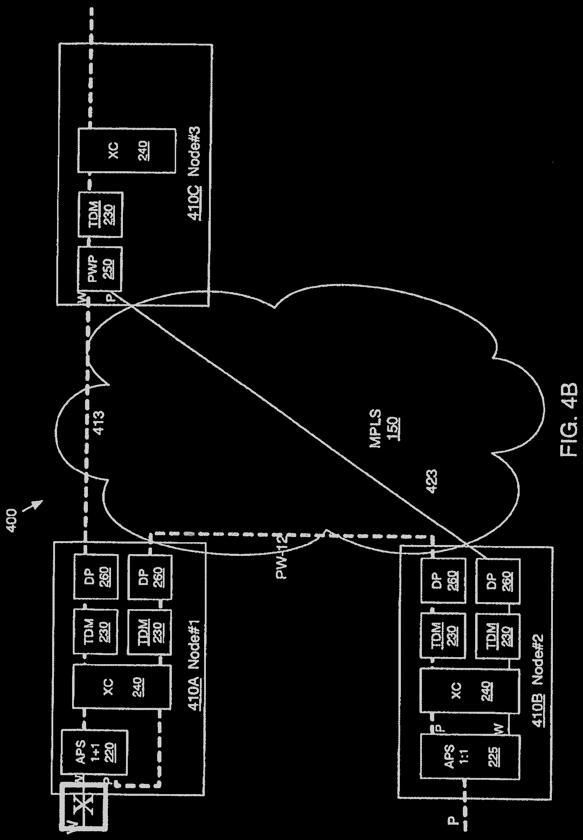

   FIG. 4B illustrates the path upon a failure in the working path connected to the first node; and

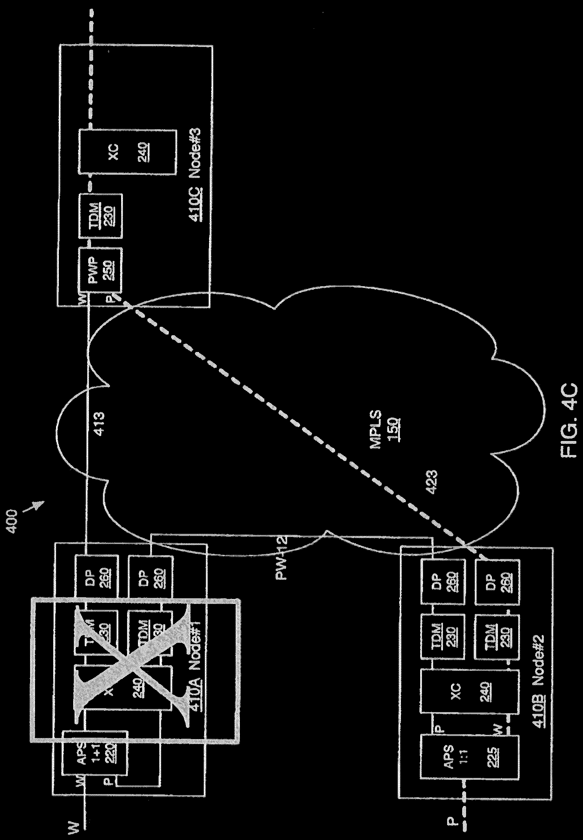

   FIG. 4C illustrates the path upon a failure of the first node.

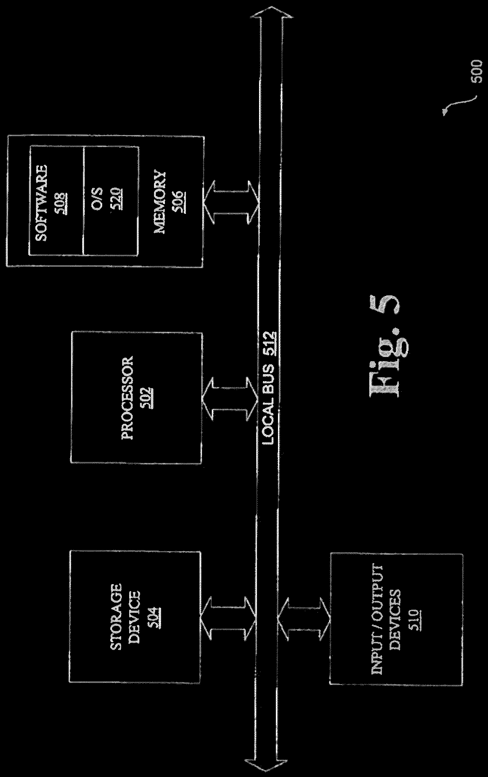

FIG. 5 is a schematic diagram illustrating an example of a system within a node for executing functionality of the present invention.

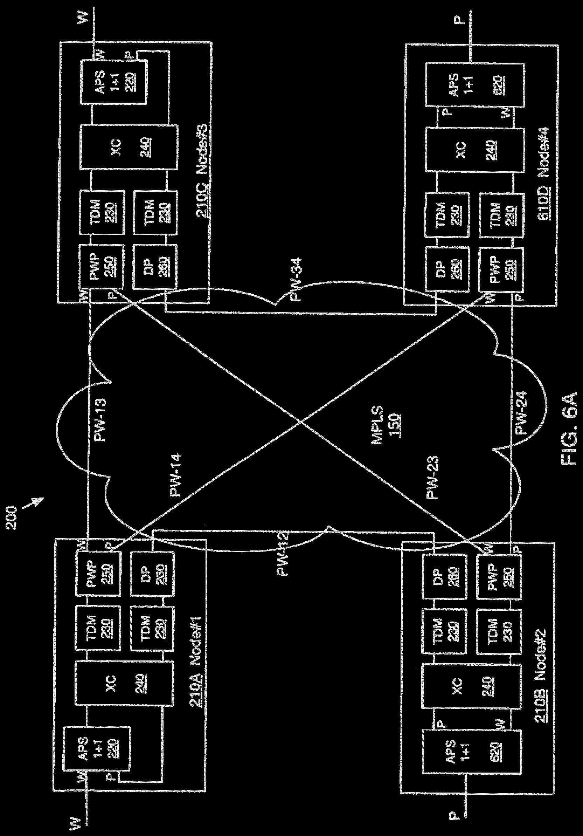

FIG. 6A is a schematic diagram of a fourth exemplary embodiment of a method of supporting SNCP over packet networks.

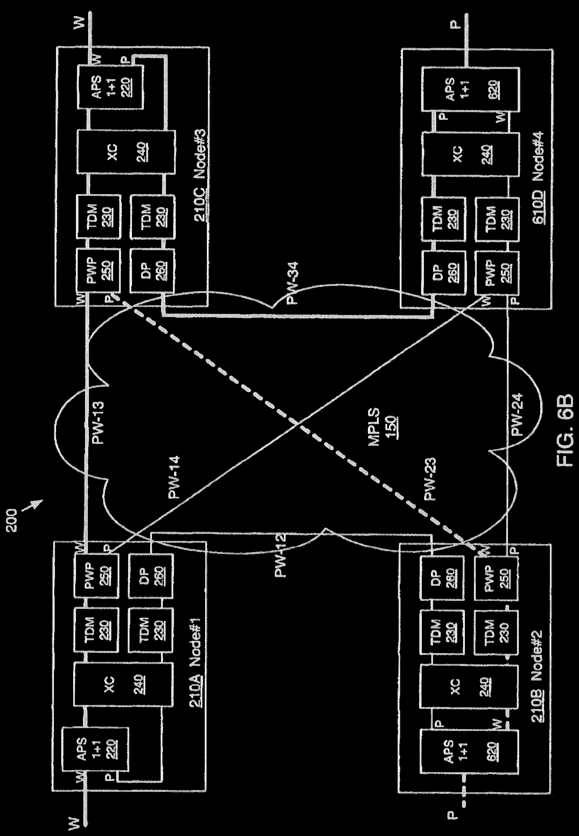

FIG. 6B is a schematic diagram of SDH paths in the fourth exemplary embodiment during a non-failure scenario.

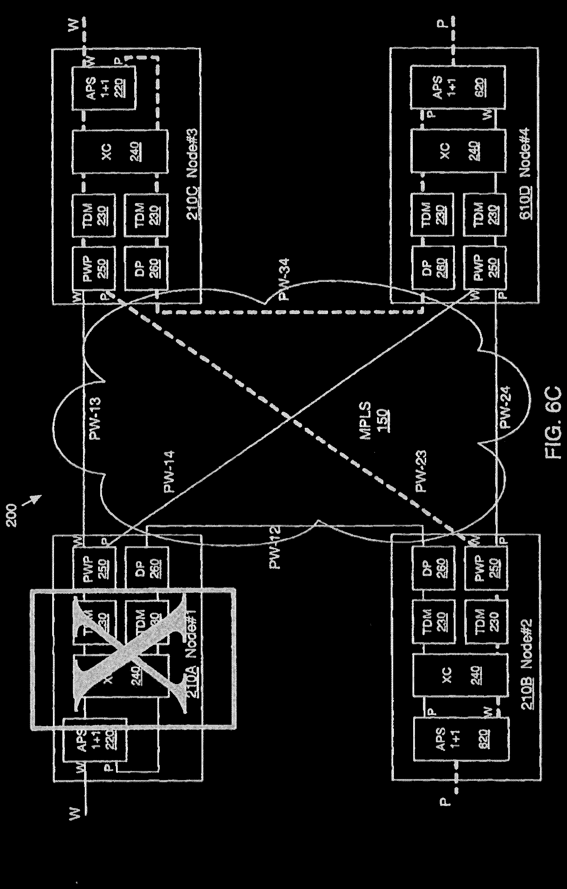

FIG. 6C is a schematic diagram of SDH paths in the fourth exemplary embodiment during a first failure scenario.

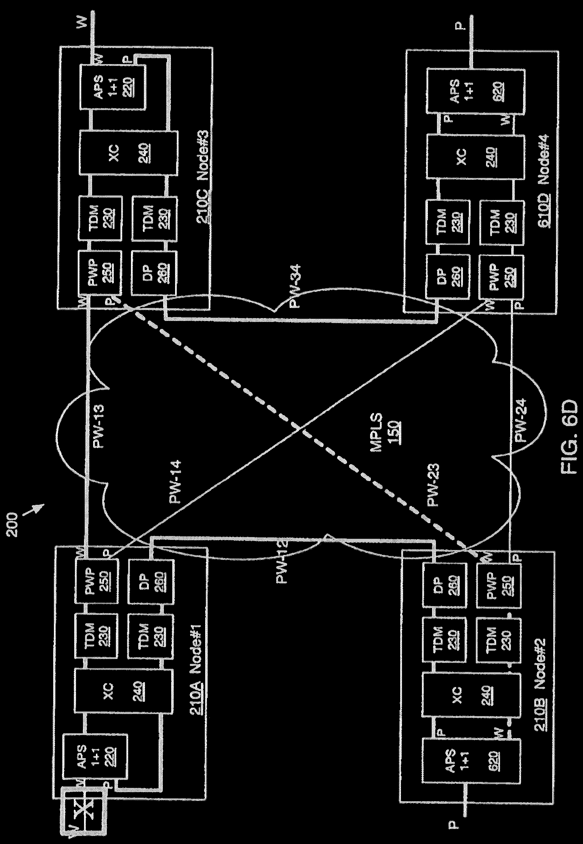

FIG. 6D is a schematic diagram of SDH paths in the fourth exemplary embodiment during a second failure scenario.

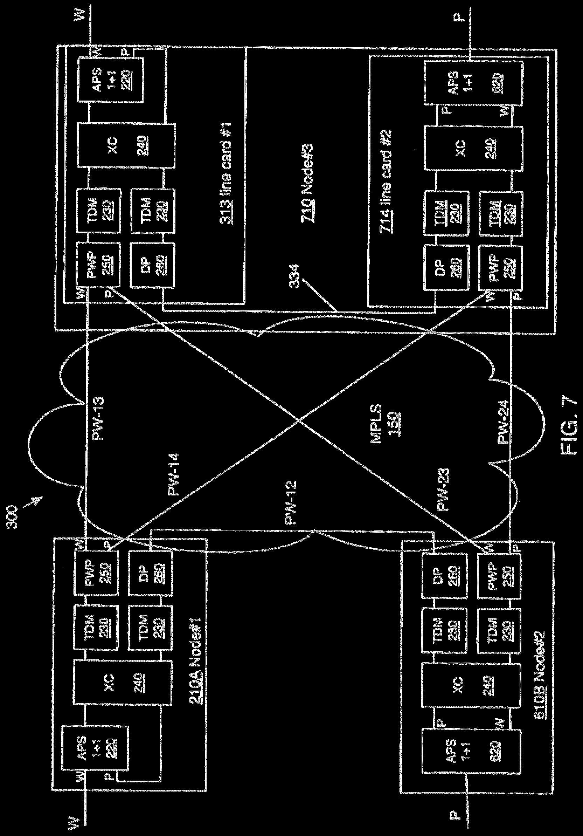

FIG. 7 is a schematic diagram of a non-DNI implementation of the fourth embodiment of a method of supporting SNCP over packet networks.

### DETAILED DESCRIPTION

Reference will now be made in detail to embodiments of the present invention, examples of which are illustrated in the accompanying drawings. Wherever possible, the same reference numbers are used in the drawings and the description to refer to the same or like parts.

In what follows, the term SDH will be used to refer to SDH and SONET indistinctly, and SNCP will be used to refer to SNCP and UPSR indistinctly, noting that USPR applies only to rings while SNCP applies to any sub-network topologies. Please note that the protection methods described herein may be configured to revert from the protection path to the working path when the failure condition in the working path is removed. Unless otherwise noted, the application of the current invention applies to both revertive and non-revertive protection implementations.

### First Embodiment: 2x2 Configuration

Among other possible embodiments, in a first exemplary embodiment of a method of supporting SNCP over packet networks, a packet sub-network is connected to two SDH sub-networks and transports one or more SDH paths that are SNCP-protected in both SDH sub-networks. In this embodiment, the packet sub-network connects to each of the two sub-network interconnection points by a working path and a protection path

FIG. 2A is a schematic diagram of a second network 200 having four SNCP terminating nodes 210 including a first node 210A, a second node 210B, a third node 210C and a fourth node 210D. The first node 210A and the second node 210B are part of a first sub-network, and the third node 210C and the fourth node 210D are part of a second sub-network. The nodes 210 may be SNCP terminating equipment (STE), examples of which include, but are not limited to, add/drop multiplexers. The first sub-network and the second sub-network may be, for example, counter rotating rings.

As noted above, the first sub-network and the second sub-network are path protected by SNCP. The first sub-network and the second sub-network provide working and protection paths, implementing dual node interconnection (DNI). The dual nodes for the first sub-network are the first node 210A and the second node 210B. The dual nodes for the second sub-network are the third node 210C and the fourth node 210D. Each of these nodes 210 provides a working PW path and a protection PW path across an MPLS sub-network 150.

Under the first embodiment, the first node 210A terminates a first pseudo wire PW-13 and a fourth pseudo wire PW-14. The second node 210B terminates a second pseudo wire PW-23 and a third pseudo wire PW-24. The third node 210C terminates the first pseudo wire PW-13 and the second pseudo wire PW-23. The fourth node 210D terminates the third pseudo wire PW-24 and the fourth pseudo wire PW-14. It should be noted that the pseudo wire names do not imply an order of fail-over precedence for any particular failure scenario.

The first sub-network and the second sub-network are connected via a packet switched network, in this case the MPLS sub-network 150. The MPLS sub-network 150 may provide pseudo wire transport services as described previously. While this embodiment describes the packet switched sub-network as an MPLS sub-network 150, there is no objection to using other packet switching networking protocols to provide the pseudo wire transport between the first sub-network and the second sub-network. In addition, the first node 210A and the second node 210B may communicate through the MPLS sub-network 150 via a fifth PW-12. Similarly, the third node 210C and the fourth node 210D may communicate through the MPLS sub-network 150 via a sixth PW-34.

It is desirable for the MPLS sub-network 150 to transport, or carry, data plane traffic between the first sub-network and the second sub-network using a single active data plane path to avoid bandwidth duplication. For example, while the first pseudo wire PW-13, the fourth pseudo wire PW-14 the second pseudo wire PW-23, and the third pseudo wire PW-24 may all carry control plane traffic across the MPLS sub-network 150 to exchange lower bandwidth traffic, for example, signals indicating alarms, conditions and protection status, it is desirable for only one of these four paths at a time to carry data plane traffic. The first embodiment provides SNCP protection between the first sub-network and the second sub-network while making more efficient use of MPLS sub-network 150 bandwidth than, for example, the first network 100 (FIG 1) where the MPLS sub-network 150 carries duplicate data plane traffic between the first sub-network and the second sub-network.

Each node 210 contains internal functional components including two time division multiplexer/demultiplexer (TDM) blocks 230, a data plane module 260, a cross connect (XC) block 240, and an additional data plane processor providing 1: 1 pseudo wire protection services (PWP) block 250. The XC block 240 implements a high/low-order SDH path cross-connect. In addition, the first node 210A and the third node 210C include an automatic protection switch (APS) 1+1 220, while the second node 210B and the fourth node 210D include an APS 1:1 block 225. The APS 1+1 block 220 implements APS 1+1 unidirectional-like logic at the SDH path level. The APS 1:1 block 225 implements APS 1:1 unidirectional-like logic at the SDH path level. The TDM blocks 230, among other functions, may implement circuit emulation functions. The internal components may be implemented as individual components, for example, hardware components communicating via hardwired connections. A single hardware component may provide the functionality of one or more of the internal components. As explained in further detail below the internal components may be implemented as software or firmware modules within a computer system internal to the node 210, or may be implemented in a combination of hardware and software.

The DP block 260 implements data plane aspects of PW functionality. The PWP block 250 implements, in addition to the functions provided by the DP block 260, data plane aspects of PW protection functionality. For the purpose of this document, suffice to say that the PWP block 250 switches data plane forwarding to the protection PW (labeled as "P") when the working PW (labeled as "W") is in failure condition. In addition to the data plane services, the PWP block 250 provides path switching services between working and protection paths. These services may include, among others, interpreting conditions to determine whether to select the working path or the protection path for carrying SDH path traffic. For example, a condition may include a packet switched network (PSN) fault or an attachment circuit (AC) fault). PW failure definition and detection mechanisms are known to persons having ordinary skill in the art and are beyond the scope of this document.

The PWP block 250 in each node 210 determines which path (if any) will carry data plane traffic from that node 210 across the MPLS sub-network 150. The PWP block 250 in the first node 210A may select between the first pseudo wire PW-13 and the fourth pseudo wire PW-14. The PWP 250 in the second node 210B may select between second pseudo wire PW-23 and the third pseudo wire PW-24. The PWP block 250 in the third node 210C may select between the first pseudo wire PW-13 and the second pseudo wire PW-23. The PWP block 250 in the fourth node 210D may select between the fourth pseudo wire PW-14 and the third pseudo wire PW-24.

It should be noted that while the network facing ports of the PWP blocks 250 are labeled W (working) and P (protection), they may be connected to ports with contrary names. This is due to the nature of cross connecting nodes in a manner not normally used in SDH networks. For example, the PWP block 250 port W in the fourth node 210D is connected to the PWP block 250 port P in the first node 210A via the fourth pseudo wire PW-14. Similarly, the PWP block 250 port P in the third node 210C is connected to the PWP block 250 port W in the second node 210B via the second pseudo wire PW-23.

FIG. 2B illustrates the working and protection paths of the first sub-network under normal conditions, when there are no failures in the network 200. In the no failure condition, the SDH working path connected to the first node 210A is carried over the first pseudo wire PW-13 to the third node 210C. This working path is indicated in FIG. 2B by a solid heavy line. In the third node 210C the received path is sent both to the SDH working interface and to the fourth node 210D over the sixth PW-34. The fourth node 210D forwards the path to the SDH protection interface.

The second pseudo wire PW-23 does not carry an SDH path in the right-to-left direction from the third node 210C to the second node 210B since the PWP block 250 in the third node 210C is switched to the working channel. The third pseudo wire PW-24 also does not carry an SDH path since the APS 1:1 block 225 in the fourth node 210D is switched to the working channel. As a result, the working channel in the second node 210B APS 1:1 225 block receives an AIS signal from the TDM block 230, and the APS 1:1 block 225 is switched to the protection channel. The second pseudo wire PW-23 does not carry an SDH path in the left-to-right direction from the second node 210B to the third node 210C since APS1:1 block 225 is switched to the P port. Therefore, the SDH protecting path connected to the second node 210B is carried to the first node 210A over the fifth PW-12, but the APS 1+1 220 in the first node 210A selects the working path instead (since the working path is in "no defect" state).

Upon a failure in the working path connected to the first node 210A, as shown by the blocked "X" in FIG. 2C, the APS 1+1 block 220 in the first node 210A switches to the protection channel P, which carries the protection path from the second node 210B, denoted by a heavy dashed line. As a result, the protection path is still carried over the first pseudo wire PW-13 towards the third node 210C. Note that only the first pseudo wire PW-13 is transporting data plane traffic across the MPLS sub-network 150, while the fourth pseudo wire PW-14, the second pseudo wire PW-23, and the third pseudo wire PW-24 are not carrying data plane traffic.

Upon a failure in the first node 210A, as shown in FIG. 2D, the second node 210B will detect LOS or AIS in the output of the TDM block connected to the fifth PW-12, upon which the APS 1:1 block 225 in the second node 210B switches to the working channel, such that the protection path connected to the second node 210B is carried to the third node 210C over the second pseudo wire PW-23, as denoted by the heavy dashed line. The third node 210C PW protection block switches from the first pseudo wire PW-13 to the second pseudo wire PW-23, triggered by failure in the first node 210A. The path received at the third node 210C is transmitted over the SDH interfaces in the third node 210C and the fourth node 210D as in the "no failure" scenario shown in FIG. 2B.

FIG. 2E shows the signal path in the event of a failure of the third node 210C. In this case, the PWP block 250 of the first node 210A detects LOS in the first pseudo wire 13, causing the PWP block 250 of the first node 210A to switch to the protection channel, carried over the fourth pseudo wire PW-14 to the fourth node 210D, as denoted by the heavy solid line. Similarly, the DP 260 in the fourth node 210D detects failure of the third node 210C by LOS over the sixth PW-34, causing the APS 1:1 225 in the fourth node 210D to switch to the working channel.

Of course, additional failure scenarios are possible. For example, failures may occur in pseudo wire paths within the MPLS sub-network 150. As applied to pseudo wire paths within the MPLS sub-network 150, the term "failure" is intended broadly to include not meeting various configurable minimum performance standards. For example, traffic on a working path may be passing, but performance parameters, such as a bit error ratio on the working path may exceed a pre-configured threshold, causing the PWP blocks 250 with the terminating nodes 210 to switch from the working path to a protection path.

### Second Embodiment: 2x2 configuration with single node SDH

A second exemplary embodiment of a method of supporting SNCP over packet networks is shown in FIG. 3. In general, the second embodiment is similar to the first embodiment, except that according to the second embodiment, the interconnection between the MPLS sub-network 150 with the first SDH sub-network and/or the second SDH sub-network takes place over a single node, as opposed to DNI.

FIG. 3 is a schematic diagram of a third network 300 having three SNCP terminating nodes including a first node 210A, a second node 210B, and a third node 310. The first sub-network deploys a DNI connection with the MPLS sub-network 150. The first node 210A and the second node 210B are part of a first sub-network, and the third node 310 is part of a second sub-network. Unlike the first embodiment, under the second embodiment the second sub-network provides two working/protection connection pairs to the MPLS sub-network at a single node, the third node 310. While FIG. 3 shows the first sub-network having a DNI connection, while the second sub-network terminates dual working/protection pairs within a single node (in this case, the third node 310), there is no objection to a network where the first sub-network terminates dual working/protection pairs within a single node and the second sub-network terminates dual working/protection pairs within a single node. The topology at each sub-network is independent of the topology of the sub-network across the MPLS sub-network.

As shown in FIG. 3, the third node 310 may terminate a first working/protection pair with, for example, a first line card 313, and the third node 310 similarly terminates a second working/protection pair with, for example, a second line card 314.

From the point of view of the MPLS sub-network 150, the second embodiment functions identically to the first embodiment. The first node 210A terminates a first pseudo wire PW-13 and a fourth pseudo wire PW-14. The second node 210B terminates a second pseudo wire PW-23 and a third pseudo wire PW-24. The first line card 313 of the third node 310 terminates the first pseudo wire PW-13 and the second pseudo wire PW-23. The second line card 314 of the third node 310 terminates the third pseudo wire PW-24 and the fourth pseudo wire PW-14. Under the second embodiment, the working/protection paths between the first line card 313 and the second line card 314 is a hairpin path 334. A hairpin path is a path internal to the node. The hairpin path 334 is internal to a single node, in this case the third node 310.

A person having ordinary skill in the art will appreciate that the failure scenario path routing under the second embodiment is parallel to the failure scenario path routing under the first embodiment as described above, with the first line card 313 performing the function of the third node 210C (FIG. 2E), the second line card 314 performing the functions of the fourth node 210D (FIG. 2E), and the hairpin path 334 performing the function of the sixth PW-34 (FIG. 2E).

### Third Embodiment: 2×1 configuration

In a third exemplary embodiment of a method of supporting SNCP over packet networks, here called the 2×1 scenario, a packet network is connected to two SDH sub-networks and carries an SDH path that is SNCP-protected in only one of the SDH sub-networks. In the third embodiment, the packet node is connected to two paths (working and protection) in one of the sub-network interconnection points, and to a single path in the other. As with the first and second embodiments, the packet sub-network is configured to provide the same type of path protection as an SDH sub-network using SNCP.

FIG. 4A is a schematic diagram of a fourth network 400 having three SNCP terminating nodes 410 including a first node 410A, a second node 410B, and a third node 410C. The first sub-network deploys a DNI connection with the MPLS sub-network 150. The first node 410A and the second node 410B are part of a first sub-network, and the third node 410C is part of a second sub-network. Unlike the first and second embodiments, under the third embodiment the second sub-network provides a single working/protection connection pair to the MPLS sub-network at a single node, the third node 410C.

As shown in FIG. 4A, the PWP block 250 of the third node 410C may terminate a working path 413 from the first node 410A, and a protection path 423 from the second node 410B. Compared with the first embodiment, PW protection blocks 260 (FIG. 2A) in the first node 410A and the second node 410B become degenerate, becoming DP blocks 250, implementing PW functionality without protection. The third node 410C may omit or bypass an APS 1+1 block (FIG. 2A).

Under normal, non-failure conditions, the first sub-network and the second sub-network communicate between the first node 410A and the third node 410C over the working path 413. As shown in FIG 4B, if the working connection to the first node 410A fails, the APS 1+1 220 detects LOS and switch to the protection path, routing the traffic across working path 413. If, alternatively, the first node 410A fails, as shown in FIG. 4C, the PWP block 250 in the third node 410C detects LOS or receives AIS on the working path 413, causing the PWP block 250 to switch to the protection path 423. Similarly, the second node 410B detects LOS or receive AIS on fifth PW-12, causing the APS 1:1 225 in the second node 410B to switch to the working path, forwarding data over protection path 423 across the MPLS sub-network 150 to the third node 410C.

### Computer system within a node

As previously mentioned, the functionality of the APS 1+1 220, the APS 1:1 225, the TDM 230, the XC 240, the PWP block 250 and the DP 260 modules within a node 210 (FIGS. 2A-2E, FIG. 3, FIGS. 4A-4C) described in detail above may be a computer system. An example of a computer system is shown in the schematic diagram of FIG. 5. The system 500 contains a processor 502, a storage device 504, a memory 506 having software 508 stored therein that defines the abovementioned functionality, input and output (I/O) devices 510 (or peripherals), and a local bus, or local interface 512 allowing for communication within the system 500. The local interface 512 can be, for example but not limited to, one or more buses or other wired or wireless connections, as is known in the art. The local interface 512 may have additional elements, which are omitted for simplicity, such as controllers, buffers (caches), drivers, repeaters, and receivers, to enable communications. Further, the local interface 512 may include address, control, and/or data connections to enable appropriate communications among the aforementioned components.

The processor 502 is a hardware device for executing software, particularly that stored in the memory 506 The processor 502 can be any custom made or commercially available single core or multi-core processor, a central processing unit (CPU), an auxiliary processor among several processors associated with the present system 500, a semiconductor based microprocessor (in the form of a microchip or chip set), a macroprocessor, or generally any device for executing software instructions.

The memory 506 can include any one or combination of volatile memory elements (e.g., random access memory (RAM, such as DRAM, SRAM, SDRAM, etc.)) and nonvolatile memory elements (e.g., ROM, hard drive, tape, CDROM, etc.). Moreover, the memory 506 may incorporate electronic, magnetic, optical, and/or other types of storage media. Note that the memory 506 can have a distributed architecture, where various components are situated remotely from one another, but can be accessed by the processor 502.

The software 508 defines functionality performed by the system 500, in accordance with the present invention The software 508 in the memory 506 may include one or more separate programs, each of which contains an ordered listing of executable instructions for implementing logical functions of the system 500, as described below. The memory 506 may contain an operating system (O/S) 520. The operating system essentially controls the execution of programs within the system 500 and provides scheduling, input-output control, file and data management, memory management, and communication control and related services.

The I/O devices 510 may include input devices, for example but not limited to, a keyboard, mouse, scanner, microphone, etc. Furthermore, the I/O devices 510 may also include output devices, for example but not limited to, a printer, display, etc. Finally, the I/O devices 510 may further include devices that communicate via both inputs and outputs, for instance but not limited to, a modulator/demodulator (modem; for accessing another device, system, or network), a radio frequency (RF) or other transceiver, a telephonic interface, a bridge, a router, or other device.

When the system 500 is in operation, the processor 502 is configured to execute the software 508 stored within the memory 506, to communicate data to and from the memory 506, and to generally control operations of the system 500 pursuant to the software 508, as explained above.

### Fourth Embodiment: no APS 1:1

APS 1:1 logic may involve decisions on one transmission direction based on path conditions in the opposite direction, which requires some degree of coupling between path directions. When such coupling is not present, the APS 1:1 block 225 (FIG. 2A) may not be directly supported in some SDH framer implementations. FIG. 6A is a schematic diagram of a fourth exemplary embodiment of a method for supporting SNCP over packet networks using APS 1+1 blocks 620 in place of APS 1:1 blocks 225 (FIG 2A).

The fourth embodiment is essentially similar to the second embodiment, except the second node 210B (FIG. 2A) is replaced by a second node 610B, and the fourth node 210D is replaced by a fourth node 610D. Regarding the second node 610B, an APS 1+1 block 620 replaces the APS 1:1 block 225 (FIG. 2A). Similarly, regarding the fourth node 610D, an APS 1+1 block 620 replaces the APS 1:1 block 225 (FIG. 2A). Under the fourth embodiment, the failure scenarios of the second embodiment detailed above apply, with the differences explained hereafter.

FIG. 6B shows the signal paths in the network 200 where no failures are present. A heavy solid line shows the working path, while a heavy dashed line shows the protection path. The working path is transported from the first node 210A through the MPLS sub-network 150 via the first pseudo wire PW-13 to the third node 210C. The protection path is transported from the second node 610B through the MPLS sub-network 150 via the second pseudo wire PW-23 to the third node 210C.

FIG. 6C shows the signal paths in the network 200 where the first node 210A has failed. In this case, the PWP block 250 in the third node 210C detects LOS or AIS on the first pseudo wire PW-13 and switches from the first pseudo wire PW-13 to the second pseudo wire PW-23 Under the fourth embodiment, the PW protection blocks 250 are revertive, without a wait-to-restore period, such that upon restoral of the first node 210A, the third node 210C will immediately revert to the first pseudo wire 13, as shown in FIG. 2B. Otherwise, in the right-to-left direction the path would not be transmitted over the first node 210A interface (working path), and in the left-to-right direction a failure in the protection path would not be resolved.

FIG. 6D shows the signal paths in the network 200 where the working path to the first node 210A has failed In this scenario, the APS 1+1 block 220 in the first node 210A detects the failure at working port W and switches from the working path W to the protection path P received via the fifth pseudo wire PW-12 from the second node 210B. The first node 210A forwards this data path across the first pseudo wire PW-13 to the third node 210C, shown as a heavy solid line. The second node 210B forwards a protection data path to the third node 210C across the second pseudo wire PW-23, as shown by the heavy dashed line.

In some scenarios, the SDH path may be transmitted twice over the MPLS packet sub network 150, thereby causing bandwidth duplication. To avoid bandwidth duplication, the PW block functionality may be modified such that transmission over the PW is inhibited when the PW is not selected by the PWP block 250 in the far end. This state may be signaled by the PW protection block (250) using different mechanisms. As will be familiar to a person having ordinary skill in the art, the selected PW indication depends on the way the PW is signaled. For example, for an LDP-signaled PW, draft-muley-dutta-pwe3-redundancy-bit defines a "preferential forwarding bit" in the LDP PW status field for this purpose. For static PW, draft-martini-pwe3-static-pw-status extends the LDP PW status field for static PW (without LDP signaling) Other similar methods for signaling PW are within the scope of the present invention.

A variation of the fourth embodiment of a method of supporting SNCP over packet networks is shown in FIG. 7. Under this variation, the interconnection between the MPLS sub-network 150 with the first SDH sub-network and/or the second SDH sub-network may take place over a single node, as opposed to DNI.

FIG. 7 is a schematic diagram of the network 200 having three SNCP terminating nodes including a first node 210A, a second node 610B, and a third node 710. The first sub-network deploys a DNI connection with the MPLS sub-network 150. The first node 210A and the second node 610B are part of a first sub-network, and the third node 710 is part of a second sub-network. Unlike the fourth embodiment, under this variation the second sub-network provides two working/protection connection pairs to the MPLS sub-network at a single node, the third node 710.

FIG. 7 shows the first sub-network having a DNI connection, while the second sub-network terminates SNCP for dual working/protection pairs within a single node (in this case, a first line card 313 and a second line card 714 within the third node 710). However, there is no objection to a network where the first sub-network terminates dual working/protection pairs within a single node and the second sub-network terminates dual working/protection pairs within a single node. Note that the APS block in first line card 313 is the APS 1+1 block 220 and the APS block in the second line card 714 is an APS 1+1 block 620. The topology at each sub-network is independent of the topology of the sub-network at the other end. From the point of view of the MPLS sub-network 150, the variation of the fourth embodiment functions identically to the fourth embodiment.

In summary, a method for a packet sub-network connecting to two SDH sub-networks transporting SDH paths that are SNCP-protected has been presented. The packet sub-network may provide the same type of path protection as an SDH sub-network using SNCP. It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A network node (410C) comprising firsr, second, and third connectors and a protection switch, the network node further comprising a processor configured to perform the steps of:
terminating, a first network connectable by the first connector;
connecting, by the second connector, to a packet-based network that uses Multi-Protocol Label Switching, MPLS, network (150);
connecting, by the third connector, to the packet-based network;
setting, a first Pseudo-Wire, PW, path (413) via the second connector over the packet-based network to a first node (410A);
setting, a second PW path (423) via the third connector over the packet-based network to a second node (410B);
transporting, traffic between the first network and the packet-based network over the first PW path; and
shifting, the traffic to the second PW path in case of a failure of the first PW path.

2. The network node of claim 1, wherein the terminating comprises terminating of a Working, W, path or a Protection, P, path, of the first network.

3. The network node of claim 1, wherein the shifting is in response to a detecting of the failure, and wherein the failure comprises a failure in the second node or in the first PW path.

4. The network node of claim 3, wherein the failure is detected by receiving an Alarm Indication Signal, AIS.

5. The network node of claim 1, further comprising a protection switch connected between the three connectors, and wherein the shifting is performed by the protection switch.

6. The network node of claim 5, wherein the protection switch provides a revertive protection.

7. The network node of claim 5, wherein the protection switch provides a non-revertive protection.

8. The network node of claim 5, wherein the protection switch provides 1:1 protection.

9. The network node of claim 5, wherein the protection switch provides 1+1 protection.

10. The network node of claim 5, wherein the protection switch comprises an Automatic Protection Switch, APS, having a Working, W, and Protection, P, ports coupled to a main port, wherein the APS in a non-failure state transports data traffic between the main port and the Working port, and wherein the APS in a failure state transports data traffic between the main port and the Protection port.

11. The network node of claim 5, further comprising a Time - Division Multiplexer / De-Multiplexer, TDM, (230) coupled between the first connector and the protection switch, and a cross-connect, XC, (240) coupled between the TDM and the first connector.

12. The network node of claim 5, wherein the protection switch consists of, or comprises, a Pseudo-Wire Protection, PWP, switch.

13. The network node of claim 1, wherein at least one of the PW paths uses, or is compatible with, Circuit Emulation over Packet, CEP.

14. The network node of claim 1, wherein at least one of the PW paths uses, or is compatible with, Internet Engineering Task Force, IETF, Request For Comments, RFC, 4852.

15. The network node of claim 1, wherein the MPLS network uses, is based on, or supports, Multi-Protocol Label Switching - Transport Profile, MPLS-TP.

16. The network node of claim 1, wherein the first network consists of, or comprises, a Synchronous Digital Hierarchy, SDH, or a Synchronous Optical Network, SONET, and wherein the network node serve as a termination equipment that is respectively part of path protection that is part of, based on, or compatible with, Sub-Network Connection Protocol, SNCP, or Unidirectional Path Switched Ring, UPSR.
